# EUROPÄISCHE PATENTANMELDUNG

(11) **EP 3 525 390 A1**
(43) Veröffentlichungstag der Anmeldung: **14.08.2019**
(21) Anmeldenummer: 18156511.0
(22) Anmeldetag: 13.02.2018
(51) Int. Cl.: H04L 9/08

(54) **EINRICHTUNG UND VERFAHREN ZUM BEREITSTELLEN MINDESTENS EINES SICHEREN KRYPTOGRAPHISCHEN SCHLÜSSELS FÜR DEN DURCH EIN STEUERGERÄT INITIIERTEN KRYPTOGRAPHISCHEN SCHUTZ VON DATEN**

(71) Anmelder: Siemens Aktiengesellschaft, 80333 München (DE)
(72) Erfinder: Aschauer, Dr. Hans, 81829 München (DE); Falk, Dr. Rainer, 85586 Poing (DE); Feist, Christian Peter, 80689 München (DE); Pfau, Axel, 80333 München (DE); Schneider, Daniel, 80796 München (DE)

(57) **Zusammenfassung**

Einrichtung und Verfahren zum Bereitstellen mindestens eines sicheren kryptographischen Schlüssels für den durch ein Steuergerät initiierten kryptographischen Schutz von Daten

Die Erfindung beansprucht eine Einrichtung (SS) zum Bereitstellen mindestens eines kryptographischen Schlüssels für ein Steuergerät (FD), aufweisend:
- eine Konfigurationseinheit (CE, CI), die dazu ausgelegt ist, den Schlüssel, der durch eine Zweckangabe durch das Steuergerät auswählbar ist, abhängig von einem Betriebszustand (DO) des Steuergeräts zu konfigurieren und den konfigurierten Schlüssel für eine Verarbeitungseinheit (CPU) bereitzustellen (res), die den bereitgestellten Schlüssel für einen durch das Steuergerät initiierten (cmd) kryptographischen Schutz von Daten verwendet.

## Beschreibung

Die Erfindung betrifft Einrichtung und Verfahren zum Bereitstellen mindestens eines sicheren kryptographischen Schlüssels für den durch ein Steuergerät initiierten kryptographischen Schutz von Daten insbesondere in einem industriellen Umfeld bzw. Anlage.

Es besteht ein Bedarf, um mit IT-Security-Mechanismen Produkte, beispielsweise Geräte (IoT-Geräte), Gerätekomponenten oder Softwarekomponenten, vor Manipulationen und/oder einem Reverse Engineering zu schützen. Kryptographische IT-Security-Mechanismen sind bereits beispielsweise in Smart Devices, beispielsweise in Geräten des Internets der Dinge (IoT), von cyberphysikalischen Systemen, von Automatisierungssystemen der Energietechnik oder von Fertigungssystemen, der Betriebstechnik und von anderen Anlagen in Einsatz.

Der Begriff "Security" bzw. "Sicherheit" bezieht sich im Rahmen der vorliegenden Beschreibung im Wesentlichen auf die Sicherheit bzw. Schutz, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört zum Begriff "Sicherheit", wie er im Rahmen der vorliegenden Beschreibung verwendet wird. Ein Modul kann hierbei als eine Hardware- und/oder Funktionseinheit, die software- und/oder firmwaremäßig ausgestaltet sein kann, ausgeprägt sein. Die Funktion kann beispielsweise mittels eines Prozessors und/oder einer Speichereinheit zum Speichern von Programmbefehlen und/oder einer rekonfigurierbaren Digitalschaltung ausgeführt werden.

Industrielle Geräte, z.B. Steuergeräte, Feldgeräte, IoT-Geräte oder IoT-Gateways, verwenden eine Mehrzahl von kryptographischen Schlüsseln, z.B. um sich zu authentisieren, um Integrität von gespeicherten Daten und Programmcode zu schützen, um Firmware-Updates zu prüfen und zu entschlüsseln und um die Integrität und ggf. die Vertraulichkeit von Projektierungs- und Konfigurationsdaten zu schützen. Diese werden insbesondere im operativen Betrieb verwendet, um Sensordaten und Steuerdaten kryptographisch geschützt zu übertragen. Solche kryptographischen Schutzverfahren erschweren jedoch die Fehlersuche, Inbetriebnahme, Funktionstest einer verteilten Automatisierungsanlage. Auch ist ein Funktionsnachweis von einer verschlüsselten oder allgemein einer kryptographisch geschützten Datenübertragung, z.B. im Rahmen einer Abnahme einer Automatisierungsanlage im Rahmen eines Site Acceptance Tests, im Allgemeinen nicht möglich, ohne die operativen Schlüssel offenzulegen. Daher besteht die Gefahr, dass die Sicherheit im operativen Betrieb durch einen Abnahmetest gefährdet wird.

Daher besteht ein Bedarf für einen kryptographischen Schutz der Übertragung von (Sensor-/Steuer-)Daten.

Desweiteren ist beispielsweise ein Sicherheitsmodul in der europäische Patentanmeldung EP 16172472.9 bereits vorgeschlagen worden. Hierbei umfasst die Sicherheits-Steuerungseinrichtung ein Steuerungs-Grundgerät sowie ein Sicherheitsmodul, wobei das Sicherheitsmodul mittels einer Datenverbindung über eine Datenschnittstelle mit dem Steuerungs-Grundgerät verbunden ist. Weiterhin kann die Datenschnittstelle zwischen Sicherheitsmodul und Steuerungs-Grundgerät sowohl drahtgebunden als auch als Drahtlos-Schnittstelle, z.B. eine WLAN-, eine Bluetooth- oder eine NFC-Schnittstelle (NFC: Near Field Communication) ausgebildet und eingerichtet sein.

Auch das bekannte, oben genannte Sicherheitsmodul kann das Problem hinsichtlich eines Funktionsnachweises von einer verschlüsselten Datenübertragung, ohne die operativen Schlüssel offenzulegen, nicht lösen.

Es ist Aufgabe der vorliegenden Erfindung, Verfahren und Vor- bzw. Einrichtungen mit gegenüber dem oben genannten Stand der Technik verbesserten Sicherheits-Eigenschaften insbesondere in einem industriellen Umfeld zur Verfügung zu stellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Erfindung beansprucht eine Einrichtung zum Bereitstellen mindestens eines (sicheren) kryptographischen Schlüssels für ein Steuergerät, aufweisend:
- eine Konfigurationseinheit, die dazu ausgelegt ist, den Schlüssel, der durch eine Zweckangabe durch das Steuergerät auswählbar ist, abhängig von einem Betriebszustand des Steuergeräts zu konfigurieren und den konfigurierten Schlüssel für eine Verarbeitungseinheit bereitzustellen, die den bereitgestellten Schlüssel für einen durch das Steuergerät initiierten kryptographischen Schutz von Daten verwendet.

Die Zweckangabe kann beispielsweise durch die Angabe einer Schlüsselidentifikationsinformation, z.B. einem Index-Wert oder einem Schlüsselbezeichner, vorgebbar bzw. auswählbar sein. Durch den angegebenen Zweck wird im Stand der Technik ein bestimmter Schlüssel aus einer Mehrzahl von Schlüsseln eindeutig ausgewählt. Die erfindungsgemäße Einrichtung stellt bei einem angegebenen Zweck jedoch nicht immer den gleichen Schlüssel bereit. Sie stellt einen Schlüssel abhängig vom angegebenen Zweck sowie zusätzlich abhängig vom aktuellen Betriebszustand des Steuergerätes bereit. Der Betriebszustand des Steuergerätes wird dabei durch die Einrichtung ermittelt. Dadurch wird erreicht, dass ein Steuergerät in einem Testbetriebsmodus einen anderen kryptographischen Schlüssel verwendet als im regulären, operativen Betriebsmodus des Steuergerätes.

Die Einrichtung kann als ein Geräteschlüsselmanagementmodul ausgeprägt sein, die einen sicheren Schlüssel zur Verfügung stellt. Die erfindungsgemäße Einrichtung vorzugsweise geeignet für ein industrielles Gerät (Steuergerät, speicherprogrammierbare Steuerung, industrielles VPN-Gateway, IoT-Gerät, IoT-Gateway), das dem Gerät einen kryptographischen Schlüssel bereitstellt. Dieser kann insbesondere durch das Gerät zum kryptographischen Schutz von übertragenen Daten verwendet werden (z.B. TLS, IPsec/IKEv2, MACsec, S/MIME, JSON Web Encryption JWE, JSON Web Signature JWS).

Erfindungsgemäß verwendet die Einrichtung einen Schlüssel, der abhängig von dem aktuellen Betriebszustand/-modus des Gerätes bestimmt wird.

Eine Weiterbildung der Erfindung sieht vor, dass für jeden Betriebszustand ein abhängig vom jeweiligen Betriebszustand konfigurierter Schlüssel bereitgestellt werden kann.

Der Betriebszustand kann ein Debug-Modus/Security-Modus/Selbsttest-Modus/Service-Modus/ sein.

Eine Weiterbildung der Erfindung sieht vor, dass der Betriebszustand des Steuergeräts als Ableitungsparameter in die Konfiguration des Schlüssels eingeht. Der Betriebszustand kann als Ableitungsparameter auch in die Bildung des Schlüssels eingehen. Dadurch ist sichergestellt, dass Schlüssel, die in einem Betriebszustand z.B. zu Testzwecken verwendet werden, die Sicherheit des im operativen Betrieb verwendeten Schlüssels nicht gefährden. Dies ist insbesondere auch dann der Fall, wenn sowohl der einer Zweckangabe zugeordnete operative Schlüssel und der zugeordnete Testschlüssel aus einem gleichen explizit konfigurierten Basisschlüssel abgeleitet sind. Mit expliziter Konfiguration ist ein Schlüssel gemeint, der z.B. über eine Service-Schnittstelle von einem Bediener eingerichtet wird. Das Einrichten kann durch eine Eingabe des Basisschlüssels erfolgen, durch Laden einer Schlüsseldatei oder durch Ausführen eines automatisierten Schlüsselanlernvorgangs.

Dabei geht, im Gegensatz zu einem festen Debug-Schlüssel wie von Bluetooth bekannt, jedoch auch der explizit konfigurierte Schlüssel in die Bildung des Schlüssels ein. Dadurch kann z.B. getestet werden, ob die explizit konfigurierten Schlüssel funktionieren, d.h. ob zueinander passende Schlüssel auf mehreren Feldgeräten konfiguriert sind. Dabei müssen jedoch nicht separate Schlüssel je Betriebszustand explizit konfiguriert werden. Dadurch wird der Einrichtungsaufwand reduziert, der Speicherbedarf für konfigurierte Schlüssel ist reduziert, und es kann indirekt bei einer Abnahme bzw. einem Test überprüft werden, ob ein operativer Schlüssel korrekt funktioniert, ohne ihn selbst jedoch für den Test zu verwenden. Dadurch kann der Testschlüssel z.B. ggf. auch im Klartext ausgegeben werden, um die mit dem Testschlüssel kryptographisch geschützten Daten durch eine Prüfeinrichtung, z.B. einem Network Monitor wie Wireshark oder einem anderen Netzwerkdiagnosewerkzeug, auswerten zu können.

Eine Weiterbildung der Erfindung sieht vor, dass die Konfiguration eines Schlüssels mithilfe einer Schlüsselableitungsfunktion oder einer Schlüsselbildungsfunktion durchführbar ist.

Es ist möglich, dass je Gerätebetriebsmodus unterschiedliche Schlüssel konfiguriert sind, die abhängig vom aktuellen Gerätebetriebsmodus des Gerätes ausgewählt werden. Auch hier ist es möglich, dass zumindest in manchen Betriebszuständen zusätzlich eine Schlüsselableitung mit einem vom Betriebszustand des Gerätes abhängigen Schlüsselableitungsparameter erfolgt.

Der Schlüssel wird von der Einrichtung verwendet, um eine Anforderung (Kommando-Nachricht) einer Verarbeitungseinheit (CPU) des Gerätes zu bearbeiten. Die Einrichtung kann also bei der Bearbeitung der Anforderung (Kommando), welche den Zweck angibt und die der Einrichtung von der Verarbeitungseinheit des Gerätes gestellt bzw. vorgegeben wird, einen Schlüssel, der abhängig vom Gerätebetriebsmodus und - bis auf die Zweckangabe - unabhängig von der Anforderungsnachricht der CPU bestimmt wird, für eine interne kryptographische Operation bereitstellen. Unter Bereitstellen kann verstanden werden, dass der betriebsmodusabhängige Schlüssel selbst der Verarbeitungseinheit CPU bereitgestellt wird. Unter Bereitstellen kann ebenso verstanden werden, dass der Verarbeitungseinheit CPU eine kryptographische Operation bereitgestellt wird, wobei die kryptographische Operation den bereitgestellten betriebsmodusabhängigen kryptographischen Schlüssel verwendet. Die kryptographische Operation kann insbesondere eine Verschlüsselung, eine Entschlüsselung, eine Bildung einer kryptographischen Prüfsumme (Message Authentication Code, digitale Signatur) oder eine Prüfung einer kryptographischen Prüfsumme sein. Die Konfigurationseinheit der Einrichtung stellt das Ergebnis (Response-Nachricht) der Bearbeitung durch die Verarbeitungseinheit (CPU) des Gerätes bereit. Beispielsweise können in der Anforderung enthaltene Daten mit dem betriebsmodusabhängigen Schlüssel verschlüsselt werden, und die verschlüsselten Daten der Verarbeitungseinheit (CPU) als Ergebnis, d.h. in einer Antwortnachricht, bereitgestellt werden.

Eine Weiterbildung der Erfindung sieht vor, dass der Schutz von Daten zweckmäßigerweise für eine Datenkommunikation mit einem anderen Gerät vorgesehen ist. Der Schutz der Daten kann durch das Steuergerät initiiert bzw. angestoßen werden. Die Daten können übertragene Nutzdaten betreffen. Vorzugsweise betrifft der Schutz der Daten eine Authentisierung- und Schlüsselvereinbarung für eine Datenkommunikation mit einem anderen Gerät.

Der Schutz von Daten, welcher durch eine Steuergerät-interne kryptographische Operation bewerkstelligt wird, ist zweckmäßigerweise für eine Datenkommunikation mit einem anderen (Feld)Gerät bzw. einem Gerät gedacht, das ein Service-Techniker an das Steuergerät anschließt.

Eine Weiterbildung der Erfindung sieht vor, dass die Schlüsselableitungsfunktion mehrstufig durchführbar ist.

Eine Weiterbildung der Erfindung sieht vor, dass für vorbestimmbare Betriebszustände der Schlüssel ein Authentifizierungskode ist.

Eine Weiterbildung der Erfindung sieht vor, dass der konfigurierte Schlüssel durch eine vom Betriebszustand abhängige Zeichenkette gebildet ist oder gebildet werden kann. Die vom Betriebszustand abhängige Zeichenkette kann dabei insbesondere als Schlüsselableitungsparameter oder als Schlüsselbildungsparameter in die Bildung des konfigurierten Schlüssels eingehen.

Eine Weiterbildung der Erfindung sieht vor, dass die Zeichenkette aus einer Zusammensetzung bzw. Konkatenation mindestens zweier Zeichenketten besteht, wobei die erste Zeichenkette der konkatenierten Zeichenketten vom jeweiligen Betriebszustand des Steuergeräts abhängt und die zweite Zeichenkette von der von der Verarbeitungseinheit des Steuergeräts bereitgestellten Zweckangabe abhängt.

Eine Weiterbildung der Erfindung sieht vor, dass in der Konfiguration des Schlüssels ein den Betriebszustand des Steuergeräts repräsentierender Salt-Wert eingeht.

Eine Weiterbildung der Erfindung sieht vor, dass aus der Konfiguration des Schlüssels ein Schlüsselpaar hervorgeht.

Eine Weiterbildung der Erfindung sieht vor, dass das Schlüsselpaar asymmetrisch ausgebildet ist.

Eine Weiterbildung der Erfindung sieht vor, dass das Schlüsselpaar ein ECC-Schlüsselpaar ist.

Eine Weiterbildung der Erfindung sieht vor, dass die Konfiguration des Schlüssels derart ausgebildet ist, dass die mit dem Schlüssel kryptographisch geschützten Daten vor deren Entschlüsselung zu attestieren sind.

Ein weiterer Aspekt der Erfindung ist ein Verfahren zum Bereitstellen mindestens eines (sicheren) kryptographischen Schlüssels für ein Steuergerät, aufweisend folgende Schritte:
- Konfigurieren des Schlüssels, der durch eine Zweckangabe durch das Steuergerät ausgewählt wird, abhängig von einem Betriebszustand des Steuergeräts,
- Bereitstellen des konfigurierten Schlüssels für eine Verarbeitungseinheit, die den bereitgestellten Schlüssel für einen durch das Steuergerät initiierten kryptographischen Schutz von Daten verwendet.

Unter "Bereitstellen" kann im Zusammenhang mit der Erfindung beispielsweise ein Erstellen, Laden oder ein Speichern, des Teilgeheimnisses auf oder von einem Datenträger bzw. Plattform verstanden werden.

Unter "(sicherheits)geschützt" kann im Zusammenhang mit der Erfindung beispielsweise verstanden werden, dass insbesondere nur lesend auf eine sicherheitsgeschützte Komponente oder Speichereinheit zugegriffen werden kann oder dass insbesondere nur eine bestimmte Komponente zugreifen kann oder bestimmte Komponenten zugreifen können. Hierzu können beispielsweise die entsprechenden sicherheitsgeschützten Komponenten Schutzmodule oder Versiegelungen aufweisen.

Eine Sicherheitsfunktion der Einrichtung kann beispielsweise jede Funktion zur Verschlüsselung, zum Schutz der Vertraulichkeit, zum Integritätsschutz, zur Authentifikation von Daten und/oder Ähnlichem bestehen. Daten können dabei z.B. Sensordaten, Nutzerdaten, Steuerdaten, Konfigurationsdaten und/oder administrative Daten sein.

Des Weiteren wird ein Computerprogramm(produkt) mit Programmbefehlen zur Durchführung der genannten erfindungsgemäßen Verfahren beansprucht, wenn es auf einer Einrichtung der vorstehend genannten Art abläuft oder auf einem computerlesbaren Medium gespeichert ist.

Zusätzlich kann eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine sein.

Das Verfahren und Computerprogramm(produkte) können entsprechend der Weiterbildungen/Ausführungsformen der vorgenannten Einrichtung und deren Weiterbildungen/Ausführungsformen ausgebildet sein.

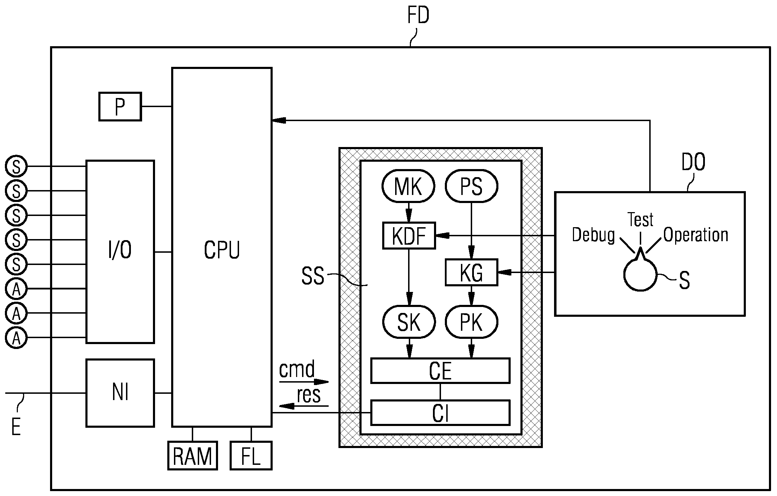

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung:
Die Figur zeigt ein industrielles Feldgerät FD (Steuergerät, IoT-Gerät, speicherprogrammierbare Steuerung (SPS bzw. PLC) o.ä.) mit einer Steuereinheit CPU, Speicher RAM oder Flash FL, I/O-Schnittstelle I/O mit verbundenen Sensoren S und Aktuatoren A sowie einer Netzwerkschnittstelle NI, die über ein Ethernet E oder Profinet/-bus angebunden sein kann. Die Steuereinheit CPU sendet und empfängt kryptographisch geschützte Datenpakete über die Netzwerkschnittstelle (unter Nutzung der Protokolle TLS, IPsec/IKEv2). Das Feldgerät FD speichert Gerätekonfigurationsdaten, z.B. zu den Steuerungsfunktionen und zum kryptographischen Schutz der zu übertragenen Daten im Flash-Speicher FL. Alternativ könnte auch ein separates EEPROM-Speichermodul P oder ein wechselbares, nicht dargestelltes USB-Speichermodul oder ein anderes Konfigurationsspeichermodul verwendet werden. Kryptographische Schlüssel werden in dem dargestellten Ausführungsbeispiel nicht im erläuterten regulären Speicher abgelegt, da dieser leicht manipulierbar und/oder auslesbar ist. Stattdessen wird ein separates Geräteschlüsselmanagementmodul SS verwendet (z.B. ein Secure Element, TrustZone Trustlet, Hardware Security Module (HSM), Intel SGX Applikation). Dieses kann von der Steuereinheit CPU angesprochen werden. Dazu werden Anforderungen bzw. Befehle (command) cmd an das Geräteschlüsselmanagementmodul SS übertragen, dort bearbeitet, und eine Antwort (response) res zurückübertragen. Die Befehle betreffen z.B. das Verschlüsseln (encrypt), Entschlüsseln (decrypt), Signieren (sign), Signaturprüfung (verify signature), Berechnung eines Nachrichtenauthentisierungscodes (HMAC). Die Befehle werden von einem nicht dargestellten Kommandointerpreter, z.B. einem Microcontroller oder einem Zustandsautomaten, abgearbeitet, wobei eine Crypto-Engine verwendet wird.

Erfindungsgemäß verwendet das Geräteschlüsselmanagementmodul SS intern kryptographische Schlüssel, die abhängig von einem ausgewählten Betriebszustand DO des Feldgerätes FD bestimmt werden. Im dargestellten Beispiel ist dazu ein Drehschalter S vorgesehen, der den aktuellen Betriebszustand z.B. Debug, Test, Operation (= laufender Betrieb) über ein Schaltsignal anzeigt. Bei dem Betriebszustand bzw. -modus kann es sich z.B. um einen Factory Acceptance Test FAT, Site Acceptance Test SAT, Operation, Service, Manufacturer Service oder Debug Betriebsmodus handeln. Das Schaltsignal wird nicht nur der Steuereinheit CPU, sondern auch dem Geräteschlüsselmanagementmodul SS bereitgestellt. Das Geräteschlüsselmanagementmodul führt eine Schlüsselableitung(sfunktion) KDF bzw. Schlüsselerzeugung- bzw. Schlüsselbildung(sfunktion) KG durch, in die der aktuelle Betriebszustand eingeht. D.h. es wird ein Schlüsselableitungsparameter abhängig von dem Betriebszustand-Schaltsignal ausgewählt. Dabei kann es sich insbesondere um eine vorgegebene Zeichenkette handeln, die abhängig vom Betriebszustand aus mehreren vorgegebenen Zeichenketten ausgewählt wird. Vorzugsweise wird zumindest ein weiterer Ableitungsparameter verwendet, der abhängig vom Zweck des abgeleiteten Schlüssels gebildet wird. Der (Verwendungs)zweck kann aus der Anforderung cmd entnommen werden. Der angegebene Verwendungszweck kann z.B. ein Schlüsselindexwert (z.B. 0, 1, 2, 3...) sein, ein Schlüsselidentifier (z.B. ein 8-Bit-Wert, eine Bitfolge oder eine Zeichenkette).

Es wird mit hoher Verlässlichkeit sichergestellt, dass in einem Testmodus oder Service-Modus auch bei einer Fehlfunktion keine gültigen operativen kryptographischen Daten entstehen können. Dadurch wird eine Inbetriebnahme, Fehlersuche, Diagnose vereinfacht, da hierbei nicht die stringenten Prozesse wie im operativen Betrieb zum Schutz des verwendeten operativen Schlüssels erforderlich sind. Dies ist beispielsweise bei Safety-kritischen Steuerungsfunktionen vorteilhaft, da hierbei mit hoher Verlässlichkeit sichergestellt ist, dass in einem Testbetriebsmodus entstehende kryptographischen Daten im operativen Betrieb ungültig sind.

Weiterhin ist gewährleistet, dass zwei mit zugeordneten Schlüsseln konfigurierte Geräte nur dann miteinander kommunizieren (Steuerdaten austauschen) können, wenn sie sich im gleichen Betriebsmodus befinden.

Eine erste Ausführungsform der Schlüsselbildung kann hierbei sein:

```
 Kdev:= HMAC-SHA256(SecretDeviceMasterKey, "Operation" | |
 "OpenSSLKeyStore")
```

Hierbei wird als Schlüsselableitungsparameter die Konkatenation (symbolisch als "| | "dargestellt) von zwei Teilzeichenketten verwendet. Die erste Teilzeichenkette (hier "Operation") wird abhängig vom aktuellen Betriebszustand vom Geräteschlüsselmanagementmodul SS ausgewählt und kann daher nicht von der Steuereinheit CPU bestimmt werden. Der zweite Parameter (hier "OpenSSLKeyStore") wird von der CPU als Parameter zusammen mit einem Befehl an das Geräteschlüsselmanagementmodul übergeben. Das Geräteschlüsselmanagementmodul bildet den konkatenierten Ableitungsparameter, führt die Schlüsselableitungsberechnung unter Nutzung des internen Schlüssels SecretDeviceMasterKey MK in der Konfigurationseinheit CE durch, und stellt das Ergebnis (Kdev) in einer Speichereinheit CI bereit, welches über eine Antwort res zur CPU gelangt.

Eine weitere Ausführungsform hierbei kann sein:

```
 Kdev:= HMAC-SHA256( HMAC-SHA256(SecretDeviceMasterKey, "Oper-
 ation"), "OpenSSLKeyStore"))
 Es erfolgt eine mehrstufige Schlüsselableitung.
```

Eine weitere Ausführungsform der Schlüsselbildung hierbei kann sein:

```
 Kdev:= HKDF(salt=" Operation", IKM=SecretDeviceMasterKey, in-
 fo=" OpenSSLKeyStore", len=32)
```

Es wird hierbei eine HKDF-Schlüsselableitungsoperation verwendet, bei der ein Salt-Parameter abhängig von dem aktuellen Gerätebetriebszustand durch das Geräteschlüsselmanagementmodul bestimmt wird. Der Parameter "info" wird von der Steuereinheit CPU übergeben.

Eine weitere Ausführungsform der Schlüsselbildung hierbei kann sein:

```
 _cpri_GenerateKeyRSA() (siehe [TPM2.0])
```

Der Parameter "label", der bei der Bildung eines RSA-Schlüsselpaares verwendet wird, wird wie in der ersten Ausführungsform als Konkatenation "Operation" | | "OpenSSLKeyStore" gebildet. Ein Beispiel für eine geeignete RSA-Schlüsselbildungsfunktion ist _cpri_ GenerateKeyRSA. Dabei wird ausgehend von einem primary seed, in der Figur mit PS gekennzeichnet, und abhängig von dem label-Parameter ein RSA-Schlüsselpaar, welches in der Figur mit PK gekennzeichnet ist, bestimmt.

Eine weitere Ausführungsform hierbei kann sein:

```
 _cpri_GenerateKeyECC() (siehe [TPM2.0])
```

Die Erfindung kann entsprechend auch bei der Bildung eines ECC-Schlüsselpaares verwendet werden. Auch bei _cpri_GenerateKeyECC() geht ein Parameter "label" in die Schlüsselbildung ein.

Diese vom Gerätebetriebszustand abhängige Schlüsselbildung bzw. Schlüsselableitung hat den Vorteil, dass es nicht möglich ist, dass eine manipulierte Steuersoftware eine falsche Betriebszustandsinformation bereitstellt. In einer anderen Ausführungsform wird der Gerätebetriebszustand jedoch durch das Gerät selbst verwaltet und dem Geräteschlüsselmanagement-modul bereitgestellt. Der Betriebszustand eines Feldgerätgerätes kann beispielsweise durch einen Codierstecker (Steckbrücke) oder einen Taster oder einen Schalter festgelegt werden.
Damit wird insbesondere gewährleistet, dass eine kryptographisch geschützte Datenübertragung zwischen Geräten nur möglich ist, wenn die Geräte sich im gleichen Betriebsmodus befinden. Damit wird mit hoher Verlässlichkeit gewährleistet, dass ein Gerät, das sich in einem Testmodus oder Service- bzw. Debug-Modus befindet, nicht kryptographisch geschützte Nachrichten (z.B. Steuerbefehle, Messwerte) sendet, die von einem Gerät, das sich im operativen Modus (Betriebszustand) befindet, als gültig erkannt werden.

Als Schlüsselableitungsfunktion kann z.B. PBKDF2, HMAC-SHA256 oder HMAC-SHA3 verwendet werden. Weiterhin kann eine Schlüsselableitungsfunktion eine Schlüsselgenerierungsfunktion z.B. KG sein, die aus einem Seed (z.B. private primary seed) deterministisch einen privaten kryptographischen Schlüssel bzw. ein Schlüsselpaar für einen asymmetrischen kryptographischen Algorithmus generiert (solche Funktionen siehe z.B.[TPM2.0]).

Weiterhin ist es möglich, dass bei Bereitstellen eines Betriebszustands an das Geräteschlüsselmanagementmodul Schlüssel bzw. Schlüsselbildungsparameter eines anderen Betriebszustands/-modus gelöscht werden. Insbesondere können beim Aktivieren eines Debug-Betriebsmodus oder eines Hersteller-Service-Betriebsmodus für den operativen Betrieb konfigurierte Schlüssel gelöscht werden. Beim Aktivieren eines Debug-Betriebsmodus kann das Geräteschlüsselmanagementmodul insbesondere einen Freischaltcode für eine Debug-Schnittstelle des Feldgerätes bereitstellen (z.B. JTAG, lokaler Terminal-Schnittstelle). Das Geräteschlüsselmanagementmodul kann dabei weiterhin einen Servicezugang authentisieren und auf Zulässigkeit prüfen (z.B. auf Basis eines Rollenzertifikats). Bei positiver Prüfung stellt das Schlüsselmodul einen oder mehrere Debug-Codes bereit, um einen Debug-Modus einer oder mehrerer Komponenten des Feldgerätes zu aktivieren. Das Geräteschlüsselmanagement-Modul kann dabei im Kommunikationspfad der Debug-Schnittstelle als "Proxy" liegen, oder es kann die Authentisierungsdaten zur Freischaltung über eine Schnittstelle einem Nutzer bereitstellen.

Das Geräteschlüsselmanagementmodul kann weiterhin eine Attestierung bereitstellen, welche die konfigurierten Schlüssel des aktuellen oder mehrerer Betriebszustände bestätigt, ohne den Wert der Schlüssel preiszugeben. Insbesondere kann das Geräteschlüsselmanagement-Modul eine Attestierungsdatenstruktur digital signieren, die Hash-Werte der Schlüssel und ggf. den Schlüssel zugeordnete Verwaltungsdaten (z.B. Gültigkeitsdauer, Konfigurationszeitpunkt) enthält. Dies hat den Vorteil, dass die Integrität der auf einem HSM bzw. Geräteschlüsselmanagementmodul konfigurierten, operativen Schlüssel überprüft werden kann, ohne die Schlüssel selbst zu offenbaren.

Ein HSM bezeichnet normalerweise ein internes oder externes Peripheriegerät für die effiziente und sichere Ausführung kryptographischer Operationen oder Applikationen. Dies ermöglicht zum Beispiel, die Vertrauenswürdigkeit und die Integrität von Daten und den damit verbundenen Informationen in sicherheitskritischen IT-Systemen sicherzustellen.

Dadurch kann z.B. bei einem Factory Acceptance Test (FAT) oder einem Site Acceptance Test (SAT) mit speziellen FAT-Keys (Schlüsseln) bzw. SAT-Keys (Schlüsseln) der Test durchgeführt werden. Jedoch wird trotzdem ermöglicht, durch die Attestierungsinformation die Übereinstimmung der operativen Schlüssel auf unterschiedlichen Geräten zu verifizieren, obwohl diese im FAT/SAT nicht verwendet werden.

In einer weiteren Ausführungsform wird bei der die Information über den aktuellen Betriebszustand des Feldgerätes dem Geräteschlüsselmanagementmodul über Signalleitungen von der CPU bereitgestellt. In der Figur wäre bei dieser Ausführungsform keine Verbindung zwischen KDF und DO bzw. KG und DO zu sehen. Stattdessen wäre KDF mit der CPU und KG mit der CPU verbunden. So kann nur ein spezieller, in einem Security-Modus (z.B. Trust Zone Secure World) der Steuereinheit CPU ausgeführter Programmcode die Signalleitungen zum Betriebsmodus des Gerätes ansteuern. Dadurch wird verhindert, dass beliebiger Programmcode, der auf der CPU ausgeführt wird, die dem Geräteschlüsselmanagementmodul bereitgestellte Information zum aktuellen Betriebszustand des Gerätes manipulieren kann. Das hat den Vorteil, dass weitere geräteintern verwendete Betriebszustände unterschieden werden können. So kann die CPU z.B. bei Durchführen eines Selbsttests diesen Selbsttest-Betriebsmodus dem Geräteschlüsselmanagementmodul anzeigen. Dadurch wird erreicht, dass Testdaten, die im Selbsttest erzeugt werden, auch nicht versehentlich als gültige Daten von einem anderen Gerät akzeptiert werden können, da die dafür vorgesehenen operativen Schlüssel nicht im Selbsttest-Betriebsmodus zugreifbar bzw. nutzbar sind.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

### Referenz:

[TPM2.0] TPM2.0, Specification, Part 4 Supporting Routines https://www.trustedcomputinggroup.org/wp-content/uploads/TPM-Rev-2.0-Part-4-Supporting-Routines-01.16-code.pdf

## Patentansprüche

1. Einrichtung (SS) zum Bereitstellen mindestens eines kryptographischen Schlüssels für ein Steuergerät (FD), aufweisend:
- eine Konfigurationseinheit (CE, CI), die dazu ausgelegt ist, den Schlüssel, der durch eine Zweckangabe durch das Steuergerät (FD) auswählbar ist, abhängig von einem Betriebszustand (DO) des Steuergeräts zu konfigurieren und den konfigurierten Schlüssel für eine Verarbeitungseinheit (CPU) bereitzustellen (res), die den bereitgestellten Schlüssel für einen durch das Steuergerät (FD) initiierten (cmd) kryptographischen Schutz von Daten verwendet.

2. Einrichtung nach dem vorhergehenden Anspruch, **dadurch gekennzeichnet, dass** der Schutz von Daten für eine Datenkommunikation mit einem anderen Gerät vorgesehen ist.

3. Einrichtung nach einem der vorhergehenden Ansprüche, **dadurch gekennzeichnet, dass** der Betriebszustand des Steuergeräts als Ableitungsparameter in die Konfiguration des Schlüssels eingeht.

4. Einrichtung nach einem der vorhergehenden Ansprüche, **dadurch gekennzeichnet, dass** für jeden Betriebszustand eine abhängig vom jeweiligen Betriebszustand konfigurierter Schlüssel bereitgestellt werden kann.

5. Einrichtung nach einem der vorhergehenden Ansprüche, **dadurch gekennzeichnet, dass** die Konfiguration eines Schlüssels mithilfe einer Schlüsselableitungsfunktion (KDF) oder einer Schlüsselbildungsfunktion (KG) durchführbar ist.

6. Einrichtung nach einem der vorhergehenden Ansprüche, **dadurch gekennzeichnet, dass** die Schlüsselableitungsfunktion mehrstufig durchführbar ist.

7. Einrichtung nach einem der vorhergehenden Ansprüche, **dadurch gekennzeichnet, dass** für vorbestimmbare Betriebszustände der Schlüssel ein Authentifizierungskode ist.

8. Einrichtung nach einem der vorhergehenden Ansprüche, **dadurch gekennzeichnet, dass** der konfigurierte Schlüssel durch eine vom Betriebszustand abhängigen Zeichenkette gebildet ist oder gebildet werden kann.

9. Einrichtung nach dem vorhergehenden Anspruch, **dadurch gekennzeichnet, dass** die Zeichenkette aus einer Konkatenation mindestens zweier Zeichenketten besteht, wobei die erste Zeichenkette der konkatenierten Zeichenketten vom jeweiligen Betriebszustand des Steuergeräts und die zweite Zeichenkette von der von der Verarbeitungseinheit des Steuergeräts bereitgestellten Zweckangabe abhängt.

10. Einrichtung nach einem der vorhergehenden Ansprüche, **dadurch gekennzeichnet, dass** in der Konfiguration des Schlüssels ein den Betriebszustand des Steuergeräts repräsentierender Salt-Wert eingeht.

11. Einrichtung nach einem der vorhergehenden Ansprüche, **dadurch gekennzeichnet, dass** aus der Konfiguration des Schlüssel ein Schlüsselpaar (PK) hervorgeht.

12. Einrichtung nach einem der vorhergehenden Ansprüche, **dadurch gekennzeichnet, dass** das Schlüsselpaar asymmetrisch ausgebildet ist.

13. Einrichtung nach einem der vorhergehenden Ansprüche, **dadurch gekennzeichnet, dass** das Schlüsselpaar ein ECC-Schlüsselpaar ist.

14. Einrichtung nach einem der vorhergehenden Ansprüche, **dadurch gekennzeichnet, dass** die Konfiguration des Schlüssels derart ausgebildet ist, dass die mit dem Schlüssel kryptographischen geschützten Daten vor deren Entschlüsselung zu attestieren sind.

15. Verfahren zum Bereitstellen mindestens eines kryptographischen Schlüssels für ein Steuergerät (FD), aufweisend folgende Schritte:
- Konfigurieren des Schlüssels, der durch eine Zweckangabe durch das Steuergerät (FD) ausgewählt wird, abhängig von einem Betriebszustand (DO) des Steuergeräts,
- Bereitstellen (res) des konfigurierten Schlüssels für eine Verarbeitungseinheit (CPU), die den bereitgestellten Schlüssel für einen durch das Steuergerät (FD) initiierten (cmd) kryptographischen Schutz von Daten verwendet.

16. Verfahren nach dem vorhergehenden Anspruch, **dadurch gekennzeichnet, dass** der Schutz von Daten für eine Datenkommunikation mit einem anderen Gerät verwendet wird.

17. Verfahren nach einem der vorhergehenden Verfahrensansprüche, **dadurch gekennzeichnet, dass** der Betriebszustand des Steuergeräts als Ableitungsparameter in die Konfiguration des Schlüssels eingeht.

18. Verfahren nach einem der vorhergehenden Verfahrensansprüche, **dadurch gekennzeichnet, dass** für jeden Betriebszustand ein abhängig vom jeweiligen Betriebszustand konfigurierter Schlüssel bereitgestellt wird.

19. Verfahren nach einem der vorhergehenden Verfahrensansprüche, **dadurch gekennzeichnet, dass** die Konfiguration eines Schlüssels mithilfe einer Schlüsselableitungsfunktion (KDF) oder einer Schlüsselbildungsfunktion (KG) durchgeführt wird.

20. Verfahren nach einem der vorhergehenden Verfahrensansprüche, **dadurch gekennzeichnet, dass** die Schlüsselableitungsfunktion mehrstufig durchgeführt wird.

21. Verfahren nach einem der vorhergehenden Verfahrensansprüche, **dadurch gekennzeichnet, dass** für vorbestimmbare Betriebszustände der Schlüssel ein Authentifizierungskode ist.

22. Verfahren nach einem der vorhergehenden Verfahrensansprüche, **dadurch gekennzeichnet, dass** der konfigurierte Schlüssel durch eine vom Betriebszustand abhängigen Zeichenkette gebildet wird.

23. Verfahren nach dem vorhergehenden Anspruch, **dadurch gekennzeichnet, dass** die Zeichenkette aus einer Konkatenation mindestens zweier Zeichenketten besteht, wobei die erste Zeichenkette der konkatenierten Zeichenketten vom jeweiligen Betriebszustand des Steuergeräts und die zweite Zeichenkette von der von der Verarbeitungseinheit des Steuergeräts bereitgestellten Zweckangabe abhängt.

24. Verfahren nach einem der vorhergehenden Verfahrensansprüche, **dadurch gekennzeichnet, dass** in der Konfiguration des Schlüssels ein den Betriebszustand des Steuergeräts repräsentierender Salt-Wert eingeht.

25. Verfahren nach einem der vorhergehenden Verfahrensansprüche, **dadurch gekennzeichnet, dass** aus der Konfiguration des Schlüssel ein Schlüsselpaar (PK) hervorgeht.

26. Verfahren nach einem der vorhergehenden Verfahrensansprüche, **dadurch gekennzeichnet, dass** das Schlüsselpaar asymmetrisch ausgebildet ist.

27. Verfahren nach einem der vorhergehenden Verfahrensansprüche, **dadurch gekennzeichnet, dass** das Schlüsselpaar einem ECC-Schlüsselpaar entspricht.

28. Verfahren nach einem der vorhergehenden Verfahrensansprüche, **dadurch gekennzeichnet, dass** die Konfiguration des Schlüssels derart ausgebildet ist, dass die mit dem Schlüssel kryptographischen geschützten Daten vor deren Entschlüsselung zu attestieren sind.

29. Computerprogrammprodukt mit Mitteln zur Durchführung des Verfahrens nach einem der vorgenannten Verfahrensansprüche, wenn das Computerprogrammprodukt auf einer Einrichtung, insbesondere nach einem der vorgenannten Einrichtungsansprüche, zur Ausführung gebracht wird.
